# FASCICULE DE BREVET EUROPEEN

(11) **EP 0 536 009 B1**
(45) Date de publication et mention de la délivrance du brevet: **27.03.1996**
(21) Numéro de dépôt: 92402233.8
(22) Date de dépôt: 05.08.1992
(51) Int. Cl.: A01G 17/08, B26F 1/24, B26F 1/28

(54) **Procédé pour produire des attaches fragilisables au cours du temps, dispositifs pour mettre en oeuvre le procédé et attaches obtenues au moyen du procédé**
Verfahren und Vorrichtung zur Herstellung von degradierbaren Befestigungsmitteln und so hergestellte Befestigungsmittel
Method and apparatus for making degradable fixing strips and the strips produced thereby

(30) Priorité: 01.10.1991 FR 9112039
(43) Date de publication de la demande: 07.04.1993
(73) Titulaire: EXTRUSION DE BASSE-NORMANDIE-EXBANOR, F-14100 Lisieux (FR)
(72) Inventeur: de Longcamp, Phillippe, René Henri, F-14430 Dozule (FR)
(74) Mandataire: Ecrepont, Robert

(56) Documents cités:
- FR-A- 2 647 633
- US-A- 2 388 069
- US-A- 2 982 186
- US-A- 4 150 184

## Description

La présente invention porte, d'une part, sur un procédé pour produire des attaches ou des liens fragilisables au cours du temps à partir d'un ruban comprenant un ou plusieurs fils en métal oxydable disposés longitudinalement à l'intérieur d'une matrice notamment en matière plastique telle qu'une matière thermoplastique, d'autre part, sur des dispositifs pour mettre en oeuvre le dit procédé, et enfin sur les attaches obtenues au moyen du dit procédé.

On connait des rubans qui peuvent être manufacturés par exemple selon le procédé décrit dans le brevet FR-A-2.630.371, ou encore selon la méthode de fabrication de feuilles de plastique décrite dans le brevet US-A-3.222.237.

De tels rubans sont utilisés notamment dans la vigne où ils servent à attacher sur un tuteur ou sur un fil la partie du cep destinée à pousser ; aprés la récolte, on coupe les sarments au sécateur et pour enlever les dits sarments encore maintenus par un ruban, on utilise un outil tel qu'une pince, ce qui nécessite de tenir deux outils : le sécateur pour les sarments, la pince pour les rubans.

Il en résulte une perte de temps lors des traitements.

De plus, les agriculteurs sont exposés aux dangers résultant de la manipulation de deux outils coupants.

Enfin, le tuteur peut être endommagé ou le fil détendu.

Est connue une machine (US-A-2.388.069) destinée à perforer une feuille de matériau diélectrique tel un similicuir en vue de lui conférer une microporosité.

Cette machine comprend des rouleaux qui, pourvus de pointes, effectuent une pré-perforation de la feuille.

En aval de ces rouleaux, des électrodes placées de part et d'autre de la feuille viennent se positionner en regard des préperforations.

On provoque une décharge électrique entre les deux électrodes en vis à vis de manière à percer la feuille.

Il s'agit ici d'une application tout à fait différente de l'objet de l'invention car elle ne vise pas du tout la fabrication d'attaches fragilisables comprenant un fil métallique logé dans la feuille de matériau.

La demanderesse a eu l'idée de fabriquer des rubans qui se dégradent dans le temps, de sorte qu'aprés la récolte, ils sont suffisamment fragilisés pour pouvoir être arrachés à la main sans outil spécial d'où une amélioration de la sécurité et un gain de temps.

C'est dans cette optique que la demanderesse a réalisé la présente invention qui, selon un premier aspect, a pour objet un procédé de fabrication d'un ruban tel que défini au début de cette description, ce procédé étant caractérisé en ce qu'il consiste à réaliser dans la matrice des orifices mettant en communication les fils avant l'atmosphère.

Du fait de la présence des orifices, les fils en métal oxydable sont en contact avec l'atmosphère environnante, l'humidité, l'oxygène de l'air, les produits de traitement de la vigne à caractère oxydant, etc ...

Il s'ensuit une dégradation par oxydation et les fils rouillent ; les liens peuvent être arrachés à la main sans qu'il soit nécessaire d'employer un outil coupant.

Lorsque les rubans sont stockés avant la pose, par exemple, en bobines, il ne sont que trés partiellement et trés localement en contact avec l'atmosphère et, bien entendu, les produits de traitement de la vigne ne les détériorent pas puisqu'ils ne sont pas répandus ; les rubans ne subissent pas une oxydation suffisante pour entrainer la rouille et ils ne se dégradent pas, la dégradation n'apparaissant que lorsqu'ils sont mis en place sur le terrain.

Selon un mode de réalisation préféré du procédé, on utilise un ruban dont les fils s'étendent à l'intérieur de tunnels ménagés dans la matrice et on réalise les dits orifices en perforant la paroi des tunnels depuis au moins une face de ruban.

En effet, la demanderesse a constaté que, dans les attaches fabriquées selon les procédés antérieurs, il n'y a pas contact étroit de la matrice avec les fils mais présence de zones sans contact entre la matrice et les fils. Ces zones définissent des tunnels emplis d'air autour des fils, les tunnels se formant au moment de la fabrication, d'une part, parce que les fils provoquent à leur voisinage un refroidissement de la matrice et, d'autre part, parce qu'aprés un certain temps d'utilisation les fils provoquent la formation de sillons permanents dans le revêtement des cylindres d'assemblage de la machine fabriquant les liens, ce qui accentue la formation des dits tunnels.

En utilisant le procédé selon l'invention, on met en contact le tunnel rempli d'air avec l'atmosphère environnante, ce qui accélère la dégradation locale du fil métallique oxydable.

Selon un mode de réalisation préféré de l'invention, on ajuste le pas des orifices de la matrice dans la direction longitudinale du ruban en fonction de la vitesse de fragilisation souhaitée pour les attaches.

Ainsi le procédé permet d'adapter la dégradation du fil métallique en fonction du nombre d'orifices percés dans la matrice.

Selon un autre perfectionnement de l'invention, on ajuste le diamètre des orifices réalisés dans la matrice en fonction de la vitesse de fragilisation souhaitée pour les attaches ou les liens.

Ceci permet la fabrication de rubans de différents degrés de dégradabilité. Par exemple, en Alsace, on est amené à couper les sarments plus tôt qu'en bordelais, et il convient donc de disposer de rubans différents suivant le vignoble considéré.

Suivant un second aspect, la présente invention a pour objet un ruban tel qu'une attache ou un lien obtenu au moyen du procédé décrit précédemment, le ruban comprenant un ou plusieurs fils en métal oxydable disposés dans une matrice notamment en matière plastique, la dite matrice comportant des orifices mettant en communication les fils avec l'atmosphère.

Avantageusement, les fils du ruban ne sont pas en contact étroit en tous points avec la matrice, définissant ainsi des tunnels le long des dits fils.

De préférence, les fils sont en fer recuit non galvanisé.

Selon un mode de réalisation préféré de l'invention, la matrice contient un agent chimique favorisant sa photo-dégradatation.

Suivant un troisième aspect, la présente invention a pour objet un dispositif pour la mise en oeuvre du procédé décrit ci-dessus.

Ce dispositif comprend une source délivrant le ruban, des moyens pour entrainer le ruban en continu sur une trajectoire fixe et des moyens de perforation conçus et positionnés pour perforer la matrice du ruban le long des fils qu'elle contient.

Un tel dispositif peut être intégré aisément dans une installation de fabrication de rubans.

Selon un premier mode de réalisation préféré, les moyens de perforation comprennent une tête de perforation mécanique formée d'un corps cylindrique solidaire d'un arbre d'entrainement en rotation perpendiculaire à la trajectoire du ruban et garnie en surface de picots placés en regard des axes des fils.

De préférence, la tête de perforation coopère avec une contrepartie en forme de brosse.

Avantageusement, la source est conçue pour délivrer plusieurs rubans entrainés parallèlement l'un à l'autre dans un même plan, le corps de perforation étant formé de plusieurs éléments cylindriques portant les picots et montés amovibles sur l'arbre d'entrainement en rotation avec interposition de bagues d'écartement interchangeables.

De préférence, la tête de perforation est munie de moyens de chauffage.

Selon un second mode de réalisation préféré de l'invention, les moyens de perforation comprennent au moins une électrode reliée à un générateur électrique haute tension et placée au ras de la trajectoire du ruban transversalement à celle-ci, des moyens étant en outre prévus pour mettre les fils du ruban à la terre.

Avantageusement, la source est conçue pour délivrer plusieurs rubans entrainés parallèlement l'un à l'autre dans un même plan et il est prévu plusieurs électrodes placées chacune au ras de la trajectoire d'un ruban respectif et reliées au générateur par l'intermédiaire d'un distributeur de courant alimentant successivement les dites électrodes.

Pour bien faire comprendre la présente invention, on donne ci-aprés la description détaillée des rubans et de deux modes de réalisation préférés en référence aux dessins annexés dans lesquels :
- la figure 1 est une vue de dessus d'un ruban conforme à l'invention,
- la figure 2 est une vue en coupe du ruban dans le plan X-X',
- la figure 3 est une vue de dessus d'un autre ruban conforme à l'invention,
- la figure 4 est une vue en coupe du ruban de la figure 3 dans le plan Y-Y',
- la figure 5A est une vue schématique d'un des dispositifs décrits et la figure 5B est un agrandissement partiel du cylindre à picots,
- la figure 6 est une vue en coupe du cylindre à picots pour une installation comportant deux rubans à trois fils,
- la figure 7 est une vue schématique d'un second dispositif conforme à l'invention et,
- la figure 8 est une vue en coupe du dispositif électrique de la figure 7 pour une installation comportant deux rubans à trois fils.

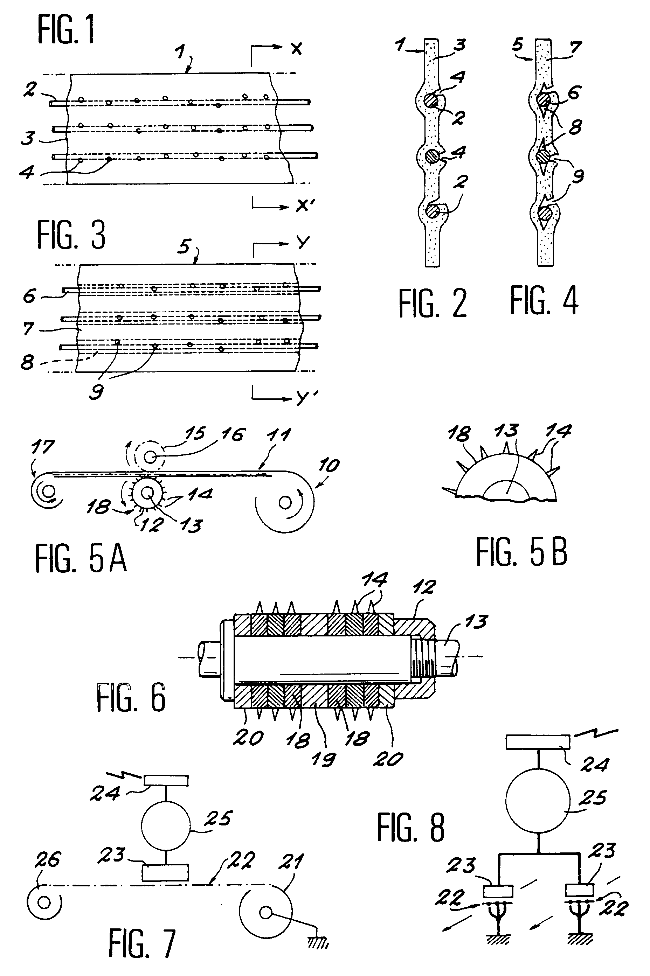

Sur la figure 1, on voit un morceau de ruban 1 comprenant trois fils métalliques 2 en fer recuit non galvanisé disposés longitudinalement à l'intérieur d'une matrice 3 en matière plastique, constituée, à titre d'exemple non limitatif, de polyéthylène.

La matrice est perforée d'orifices 4 qui mettent en communication les fils 2 avec l'atmosphère extérieure.

On voit sur la figure 2 les orifices 4 qui ont été percés dans la matrice 3 et qui permettent à l'air de communiquer avec les fils métalliques.

La figure 3 représente un morceau de ruban 5 à l'intérieur duquel s'étendent trois fils 6 disposés longitudinalement dans une matrice 7 qui sont bordés de tunnels 8 résultant de la fabrication de ruban.

Des perforations 9 ont été pratiquées au voisinage immédiat des fils, de manière à mettre en contact l'air des tunnels 8 avec l'atmosphère ce qui permet aux fils de se dégrader par oxydation à l'intérieur même de la matrice.

Sur la figure 4, on voit nettement que les perforations 9 assurent le contact de l'air contenu dans les tunnels 8 avec l'atmosphère extérieure.

Le dispositif représenté sur la figure 5A comprend une bobine d'émission 10 délivrant plusieurs rubans 11 disposés parallèlement entre eux, les rubans étant entrainés en continu sur une trajectoire fixe ; un corps cylindrique 12 solidaire d'un arbre d'entrainement 13 en rotation perpendiculaire à la trajectoire des rubans, ce corps cylindrique étant garni de picots 14 placés en regard des axes des fils contenus dans les rubans : un cylindre en contrepartie 15 du cylindre à picots également solidaire d'un arbre d'entrainement 16 en rotation perpendiculaire à la trajectoire des rubans ; et une bobine de réception 17 des rubans.

Les picots, ainsi qu'il apparait sur la vue 5B qui représente partiellement le cylindre 12, sont des pointes d'une hauteur d'environ 3 mm et ont un diamètre à la base de l'ordre de 0,8 à 1 mm. Ils sont dimensionnés pour perforer la matrice des rubans et atteindre le plan des fils métalliques oxydables.

Les picots sont disposés sur des bagues circulaires 18 qui viennent s'enfiler sur le cylindre à picots 12 et qui sont maintenus par des bagues d'ajustement 19 et de maintien 20.

On voit sur la figure 6 les bagues de maintien 20, les bagues de picots 18 et les bagues intermédiaires d'ajustement 19 qui sont dimensionnées pour que les picots perforent la matrice des rubans le long des fils qu'elle contient.

Les figures 7 et 8 représentent un second dispositif conforme à l'invention avec une bobine d'émission 21 délivrant plusieurs rubans 22 disposés parallèlement entre eux, autant d'électrodes 23 que de rubans reliés à un générateur 1500 volts haute-tension 24 à travers un distributeur de courant 25, les fils des rubans étant reçus sur une bobine de réception 26 et étant mis à la terre sur la bobine d'émission 21.

Sur la figure 8, on voit que chaque électrode 23 est placée en regard d'un ruban 22.

Le fonctionnement de l'installation représentée aux figures 5A, 5B et 6 est le suivant.

La bobine émettrice 10 délivre en continu les rubans placés en parallèle.

Le cylindre à picots 12 tourne autour de son axe perpendiculaire au plan des rubans et perfore la matrice, le cylindre de contrepartie 15 assurant un maintien des rubans et une perforation régulière.

Les picots 14 sont dimensionnés de telle sorte qu'ils perforent la matrice au moins jusqu'aux fils.

Il est possible d'adapter des bagues de picots 18 de tailles différentes et un nombre de picots variable par bague et ainsi, on peut régler à volonté la vitesse de dégradation du fil.

Il est également possible de doter le cylindre à picots 12 de moyens de chauffage qui favorisent la formation des orifices par fusion de la matière plastique de la matrice.

Le fonctionnement du dispositif représenté aux figures 7 et 8 est le suivant.

La bobine émettrice 21 délivre en continu plusieurs rubans 22 disposés en parallèle ; les dits rubans reliés à la terre par contact avec la bobine émettrice 21 passent sous les électrodes 23.

Le distributeur de courant haute tension 25 envoie le courant à la première électrode 23, ce qui revient à créer un arc électrique entre les fils qui sont à la terre et l'électrode située en face des fils du premier ruban, puis le distributeur crée un arc électrique entre la seconde électrode et le second ruban et ainsi de suite.

On peut utiliser une seule électrode pour un ensemble de fils ou de rubans mais pour affiner la puissance de l'arc électrique, il est préférable d'utiliser une électrode par ruban, ces électrodes étant alimentées à tour de rôle par le distributeur.

En faisant varier la fréquence et la puissance des arcs électriques créés, on fait varier le nombre et la dimension des orifices et donc on peut régler la vitesse de dégradation des fils.

D'une manière générale, la matrice peut contenir un agent chimique favorisant sa photo-dégradation, ce qui facilite encore l'arrachement du ruban aprés la récolte.

De même, la matrice peut être constituée par exemple en toute matière thermofusible, ou encore en toute matière caractérisée par une faible résistance à l'arrachement, à la traction, à la rupture, tel le tissu, le papier ... ou par une combinaison des caractéristiques précédentes.

Les dispositifs qui viennent d'être décrits sont des exemples non limitatifs de l'invention, du procédé revendiqué et des rubans obtenus au moyen de ce procédé.

Les dispositifs ci-dessus peuvent être intégrés à la suite des installations décrites dans le brevet FR-A-2.630.371 de la demanderesse ; par exemple, on peint utiliser une première filière plate qui met en forme un premier film plastique, sur lequel est disposée une nappe de fils froids issus d'une bobine de fils, nappe sur laquelle une deuxième filière plate dépose à chaud un second film plastique soudable au premier, le ruban ainsi obtenu aprés refroidissement approvisionnant directement les dispositifs de perforation de la présente invention ; dans ce cas, la bobine émettrice fait partie de l'installation de production du ruban ; la bobine de fils peut être mise à la terre, dans le cas d'une installation de perforation électrique.

Les rubans selon l'invention peuvent être employés dans tous domaines de l'industrie, de l'agriculture, de l'horticulture, dès lors qu'il s'agit d'utiliser des liens temporaires.

## Revendications

1. Procédé pour produire des attaches (1, 5, 11, 22) ou des liens fragilisables au cours du temps à partir d'un ruban comprenant un ou plusieurs fils (2, 6) en métal oxydable disposés longitudinalement à l'intérieur d'une matrice (3, 7) notamment en matière plastique telle qu'une matière thermoplastique **CARACTERISE** en ce qu'il consiste à réaliser, dans la matrice, des orifices (4, 9) mettant en communication les fils avec l'atmosphère.

2. Procédé selon la revendication 1 **caractérisé** en ce que, les fils (6) s'étendant à l'intérieur de tunnels (8) ménagés dans la matrice (7), on réalise les dits orifices (9) en perforant la paroi des tunnels depuis au moins une face du ruban.

3. Procédé selon la revendication 1 ou 2 **caractérisé** en ce qu'on ajuste le pas des orifices (4, 9) de la matrice (3, 7) dans la direction longitudinale du ruban, en fonction de la vitesse de fragilisation souhaitée pour les attaches.

4. Procédé selon l'une quelconque des revendications 1 à 3 **caractérisé** en ce qu'on ajuste le diamètre des orifices (4, 9) réalisés dans la matrice (3, 7) en fonction de la vitesse de fragilisation souhaitée pour les attaches ou les liens.

5. Procédé selon l'une quelconque des revendications 1 à 4 **caractérisé** en ce qu'il met en oeuvre un dispositif comprenant une source (10, 21) délivrant un ruban comprenant un ou plusieurs fils en métal oxydable, des moyens pour entrainer ce dernier en continu sur une trajectoire fixe et des moyens de perforations conçus et positionnés pour perforer la matrice du ruban le long des fils qu'elle contient.

6. Procédé selon la revendication 5 **caractérisé** en ce que les moyens de perforation comprennent une tête de perforation mécanique formée d'un corps cylindrique (12) solidaire d'un arbre d'entrainement (13) en rotation perpendiculaire à la trajectoire du ruban et garni en surface de picots (14) placés en regard des axes des fils.

7. Procédé selon la revendication 6 **caractérisé** en ce que la tête de perforation coopère avec une contrepartie (15) en forme de brosse.

8. Procédé selon la revendication 6 ou 7 dont la source est conçue pour délivrer plusieurs rubans entrainés parallèlement l'un à l'autre dans un même plan, **caractérisé** en ce que le corps de perforation est formé de plusieurs éléments cylindriques (18) portant les picots (14) et montés amovibles sur l'arbre d'entrainement en rotation avec interposition de bagues d'écartement (19) interchangeables.

9. Procédé selon l'une quelconque des revendications 6, 7 ou 8 **caractérisé** en ce que la tête de perforation est munie de moyens de chauffage.

10. Procédé selon la revendication 5 **caractérisé** en ce que les moyens de perforation comprennent au moins une électrode (23) reliée à un générateur électrique (24) haute-tension et placée au ras de la trajectoire du ruban, transversalement à celle-ci, des moyens étant en outre prévus pour mettre les fils du ruban à la terre.

11. Procédé selon la revendication 10 dont la source est conçue pour délivrer plusieurs rubans entrainés parallèlement l'un à l'autre dans un même plan, **caractérisé** en ce qu'il est prévu plusieurs électrodes (23) placées chacune au ras de la trajectoire d'un ruban respectif et reliées au générateur (24) par l'intermédiaire d'un distributeur (25) de courant alimentant successivement les dites électrodes.

12. Ruban (1, 5, 11, 22) tel qu'une attache ou un lien comprenant un ou plusieurs fils (2, 6) en métal oxydable disposés dans une matrice notamment en matière plastique **caractérisé** en ce que la matrice (3, 7) comporte des orifices (4, 9) mettant les fils en communication avec l'atmosphère.

13. Ruban selon la revendication 12 **caractérisé** en ce que les fils ne sont pas en contact étroit en tous points avec la matrice, définissant ainsi les tunnels (8) le long des dits fils.

14. Ruban selon la revendication 12 ou 13 **caractérisé** en ce que les fils sont en fer recuit non galvanisé.

15. Ruban selon l'une quelconque des revendications 12 à 14 **caractérisé** en ce que la matrice contient un agent chimique favorisant sa photo-dégradation.

## Claims

1. A process for manufacturing fasteners (1, 5, 11, 22) or ties which can weaken over time from a tape comprising one or several wires (2, 6) of oxidizable metal arranged longitudinally within a matrix (3, 7) notably of plastic such as a thermoplastic material, characterised in that it consists in making openings (4, 9) in the matrix which connect the wires with the atmosphere.

2. A process in accordance with Claim 1, characterised in that the wires (6) extending within tunnels (8) made in the matrix (7), the said openings (9) are made by piercing the wall of the tunnels from at least one side of the tape.

3. A process in accordance with Claim 1 or 2, characterised in that the spacing of the openings (4, 9) of the matrix (3, 7) is adjusted in the longitudinal direction of the tape according to the rate of weakening desired for the fasteners.

4. A process in accordance with any one of Claims 1 to 3, characterised in that the diameter of the openings (4, 9) made in the matrix (3, 7) is adjusted according to the rate of weakening desired for the fasteners or the ties.

5. A process in accordance with any one of Claims 1 to 4, characterised in that it utilises a device comprising a source (10, 21) delivering a tape comprising one or several wires of oxidisable metal, means for continuously driving the tape on a fixed path, and piercing means designed and positioned so as to pierce the matrix of the tape along the wires contained therein.

6. A process in accordance with Claim 5, characterised in that the piercing means comprise a mechanical piercing head made up of a cylindrical body (12) which is integral with a drive shaft (13) rotating perpendicular to the path of the tape and whose surface is provided with spikes (14) placed opposite the axes of the wires.

7. A process in accordance with Claim 6, characterised in that the piercing head co-operates with a counterpart (15) in the form of a brush.

8. A process in accordance with Claim 6 or 7, with which the source is designed to deliver several tapes driven parallel to one another in the same plane, characterised in that the piercing body is made up of several cylindrical elements (18) which bear the spikes (14) and are removably mounted on the rotating drive shaft with the interpositioning of interchangeable spacer rings (19).

9. A process in accordance with any one of Claims 6, 7 or 8, characterised in that the piercing head is equipped with heating means.

10. A process in accordance with Claim 5, characterised in that the piercing means comprise at least one electrode (23) which is connected to a high-voltage electric generator (24) and is placed level with the tape path, transversely thereto, moreover means being provided to earth the wires of the tape.

11. A process in accordance with Claim 10, with which the source is designed to deliver several tapes driven parallel to one another in the same plane, characterised in that there are provided several electrodes (23) each placed level with the path of a respective tape and connected to the generator (24) via a current distributor (25) successively supplying the said electrodes.

12. A tape (1, 5, 11, 22) such as a fastener or a tie comprising one or several wires (2, 6) of oxidizable metal which are arranged in a matrix notably of plastic, characterised in that the matrix (3, 7) has openings (4, 9) connecting the wires to the atmosphere.

13. A tape in accordance with Claim 12, characterised in that the wires are not in close contact with the matrix at all points, thus defining the tunnels (8) along the said wires.

14. A tape in accordance with Claim 12 or 13, characterised in that the wires are of non-galvanised annealed iron.

15. A tape in accordance with any one of Claims 12 to 14, characterised in that the matrix contains a reagent promoting its photodegradation.

## Patentansprüche

1. Verfahren zur Herstellung von versprödbaren Befestigungsmitteln oder Verbindungsteilen aus einem Band, das einen oder mehrere Drähte (2, 6) aus oxidierbarem Metall enthält, die in Längsrichtung im Inneren einer Grundmasse (3, 7) vornehmlich aus Kunststoff, beispielsweise einem Thermoplastmaterial, angeordnet sind, **DADURCH GEKENNZEICHNET**, daß es darin besteht, in der Grundmasse Öffnungen (4, 9) auszubilden, welche eine Verbindung zwischen den Drähten und der Atmosphäre herstellen.

2. Verfahren nach Anspruch 1, **dadurch gekennzeichnet**, daß die Öffnungen (9) durch Durchbohren der Wandung der Tunnelgänge von mindestens einer Fläche des Bandes aus hergestellt werden, wobei die Drähte (6) innerhalb von Tunnelgängen (8) verlaufen, die in der Grundmasse (7) ausgebildet sind.

3. Verfahren nach Anspruch 1 oder 2, **dadurch gekennzeichnet**, daß die Teilung der Öffnungen (4, 9) in der Grundmasse (3, 7) in Bandlängsrichtung in Abhängigkeit von der gewünschten Versprödungsgeschwindigkeit der Befestigungsmittel eingestellt wird.

4. Verfahren nach einem der Ansprüche 1 bis 3, **dadurch gekennzeichnet**, daß der Durchmesser der Öffnungen (4, 9) in der Grundmasse (3, 7) in Abhängigkeit von der gewünschten Versprödungsgeschwindigkeit der Befestigungsmittel eingestellt wird.

5. Verfahren nach einem der Ansprüche 1 bis 4, **dadurch gekennzeichnet**, daß zu seiner Durchführung eine Vorrichtung eingesetzt wird, welche eine Abgabequelle (10, 21) zur Zuführung eines einen oder mehrere Drähte aus oxidierbarem Metall enthaltenden Bandes, Einrichtungen zum kontinuierlichen Antreiben desselben auf einer feststehenden Bahn, und eine Perforiereinrichtung aufweist, die so ausgelegt und angeordnet ist, daß sie die Grundmasse des Bandes entlang der darin enthaltenen Drähte locht.

6. Verfahren nach Anspruch 5, **dadurch gekennzeichnet**, daß die Perforiereinrichtung einen mechanischen Perforierkopf aufweist, der aus einem zylindrischen Korpus (12) besteht, der fest mit einer Antriebswelle (13) für den Drehantrieb verbunden ist, welche senkrecht zur Bahn des Bandes steht und auf ihrer Oberfläche mit Spitzen (14) versehen ist, die sich gegenüber den Achsen der Drähte befinden.

7. Verfahren nach Anspruch 6, **dadurch gekennzeichnet**, daß der Perforierkopf mit einem bürstenförmigen Gegenstück (15) zusammenwirkt.

8. Verfahren nach Anspruch 6 oder 7, bei welcher die Abgabequelle so ausgelegt ist, daß sie mehrere, parallel zueinander in derselben Ebene angetriebene Bänder zuführt, **dadurch gekennzeichnet**, daß der Perforierkörper aus mehreren zylindrischen Elementen (18) besteht, welche Spitzen (14) tragen und lösbar auf der Drehantriebswelle angebracht sind, wobei dazwischen auswechselbare Abstandsringe (19) einsetzbar sind.

9. Verfahren nach einem der Ansprüche 6, 7 oder 8, **dadurch gekennzeichnet**, daß der Perforierkopf eine Heizeinrichtung aufweist.

10. Verfahren nach Anspruch 5, **dadurch gekennzeichnet**, daß die Perforiereinrichtung mindestens eine Elektrode (23) aufweist, die mit einem Hochspannungs-Stromgenerator (24) verbunden und auf gleicher Höhe wie die Bahn des Bandes quer zu diesem angeordnet ist, wobei die Einrichtung darüberhinaus zum Erden der Drähte im Band vorgesehen ist.

11. Verfahren nach Anspruch 10, bei welchem die Abgabequelle zur Zuführung mehrerer, parallel zueinander in derselben Ebene angetriebener Bänder ausgelegt ist, **dadurch gekennzeichnet**, daß mehrere Elektroden (23) vorgesehen sind, die jeweils in gleicher Höhe wie die Bahn eines jeweiligen Bandes angeordnet und mit dem Stromgenerator (24) mittels eines Stromverteilers (25) verbunden sind, welcher den Elektroden nacheinander Strom zuführt.

12. Band (1, 5, 11, 22) wie beispielsweise ein Befestigungsmittel oder Verbindungsteil, das einen oder mehrere Drähte (2, 6) aus oxidierbarem Metall enthält, die in einer Grundmasse, vornehmlich aus Kunststoff, angeordnet sind, **dadurch gekennzeichnet**, daß die Grundmasse (3, 7) Öffnungen (4, 9) aufweist, über welche eine Verbindung zwischen den Drähten und der Atmosphäre hergestellt ist.

13. Band nach Anspruch 12, **dadurch gekennzeichnet**, daß die Drähte nicht an allen Punkten mit der Grundmasse in engem Kontakt stehen, so daß entlang der Drähte Tunnelgänge (8) gebildet sind.

14. Band nach Anspruch 12 oder 13, **dadurch gekennzeichnet**, daß die Drähte aus geglühtem, galvanisch unbehandeltem Eisen bestehen.

15. Band nach einem der Ansprüche 12 bis 14, **dadurch gekennzeichnet**, daß die Grundmasse ein chemisches Mittel enthält,, welches ihren Abbau unter Lichteinfluß begünstigt.
